# EUROPEAN PATENT APPLICATION

(11) **EP 4 583 213 A1**
(43) Date of publication of application: **09.07.2025**
(21) Application number: 24221167.0
(22) Date of filing: 18.12.2024
(51) Int. Cl.: H01M 8/249

(54) **FUEL CELL SYSTEM**

(30) Priority: 26.12.2023 JP 2023219283
(71) Applicant: Aisin Corporation, Aichi 448-8650 (JP)
(72) Inventor: TAKAHASHI, Munehiro, Kariya, Aichi 448-8650 (JP); KATO, Kenji, Kariya, Aichi 448-8650 (JP); UEYAMA, Koji, Kariya, Aichi 448-8650 (JP); NAGAYA, Masahiro, Kariya, Aichi 448-8650 (JP)
(74) Representative: Cabinet Beau de Loménie

(57) **Abstract**

A fuel cell system (10) includes:
a fuel cell module (30) including a fuel cell stack (31) that generates power using fuel gas supplied to an anode and oxidant gas supplied to a cathode, a combustion unit (32) that burns combustible gas introduced from a combustion gas inlet, and a heat-insulating module case (35) that accommodates the fuel cell stack (31) and the combustion unit (32);
a hydrogen supply system (40) including a hydrogen supply line connected to a hydrogen inlet of the fuel cell module (30) connecting with an inlet of the anode and a hydrogen supply source (1), and a hydrogen blower (43) provided in the hydrogen supply line; and
a circulation system (60) including a hydrogen off-gas line connected to a hydrogen off-gas outlet of the fuel cell module (30) connecting with an outlet of the anode, a heat exchanger (71) provided in the hydrogen off-gas line, a combustion gas line connected to the combustion gas inlet of the fuel cell module (30), and a reflux line connected to the hydrogen supply line, the circulation system (60) distributing hydrogen off-gas discharged from the outlet of the anode and having passed through the heat exchanger (71) to the combustion gas line and the reflux line, wherein
the hydrogen supply system (40) includes a governor (44) provided upstream of the hydrogen blower (43) in the hydrogen supply line,
the reflux line branches off from the hydrogen off-gas line and is connected between the hydrogen blower (43) and the governor (44) in the hydrogen supply line,
a plurality of the fuel cell modules (30) are provided,
a plurality of the hydrogen supply systems (40) and a plurality of the circulation systems (60) are provided so as to correspond one-to-one to the fuel cell modules (30),
lengths of the respective reflux lines of the plurality of circulation systems (60) are the same, and
lengths downstream of the hydrogen blower (43) in the respective hydrogen supply lines of the plurality of hydrogen supply systems (40) are the same.

## Description

### TECHNICAL FIELD

The present specification discloses a fuel cell system.

### BACKGROUND DISCUSSION

Conventionally, as this type of fuel cell system, there has been developed a fuel cell system including: a cell stack; a high-temperature housing that accommodates the cell stack and a combustor; a fuel gas supply flow path that supplies fuel gas to the cell stack by operation of a fuel gas pump; a fuel off-gas supply flow path that guides the fuel off-gas from the cell stack to the outside of the high-temperature housing and then introduces the fuel off-gas into the high-temperature housing again to supply the fuel off-gas to the combustor; a second heat exchanger disposed at an intermediate portion of the fuel off-gas supply flow path (outside the high-temperature housing); and a recycle flow path that branches off from a downstream side of the second heat exchanger of the fuel off-gas supply flow path and is connected between the fuel gas pump and a second throttle member in the fuel gas supply flow path (See, for example, JP 7221641 B2.). In this fuel cell system, the fuel off-gas from the cell stack is cooled by the second heat exchanger and then fed to the combustor, and a part of the fuel off-gas fed from the second heat exchanger to the combustor is returned to the fuel gas supply flow path through the recycle flow path by the negative pressure generated by the operation of the fuel gas pump.

In a case where a unit including a plurality of power generation modules including the cell stack, the combustor, the fuel off-gas supply flow path, the second heat exchanger, the recycle flow path, and the like described above is configured or a system including a plurality of the units is configured, there is a possibility that the power generation amount varies for each module or unit.

A need thus exists for a fuel cell system that can suppress variation in power generation amount for each module in a case where a plurality of power generation modules is provided.

### SUMMARY

The fuel cell system of the present disclosure adopts the following means in order to achieve the above main object.

As summarized, a fuel cell system includes:
a fuel cell module including a fuel cell stack that generates power using fuel gas supplied to an anode and oxidant gas supplied to a cathode, a combustion unit that burns combustible gas introduced from a combustion gas inlet, and a heat-insulating module case that accommodates the fuel cell stack and the combustion unit;
a hydrogen supply system including a hydrogen supply line connected to a hydrogen inlet of the fuel cell module connecting with an inlet of the anode and a hydrogen supply source, and a hydrogen blower provided in the hydrogen supply line; and
a circulation system including a hydrogen off-gas line connected to a hydrogen off-gas outlet of the fuel cell module connecting with an outlet of the anode, a heat exchanger provided in the hydrogen off-gas line, a combustion gas line connected to the combustion gas inlet of the fuel cell module, and a reflux line connected to the hydrogen supply line, the circulation system distributing hydrogen off-gas discharged from the outlet of the anode and having passed through the heat exchanger to the combustion gas line and the reflux line, wherein
the hydrogen supply system includes a governor provided upstream of the hydrogen blower in the hydrogen supply line,
the reflux line branches off from the hydrogen off-gas line and is connected between the hydrogen blower and the governor in the hydrogen supply line,
a plurality of the fuel cell modules are provided,
a plurality of the hydrogen supply systems and a plurality of the circulation systems are provided so as to correspond one-to-one to the fuel cell modules,
lengths of the respective reflux lines of the plurality of circulation systems are the same, and
lengths downstream of the hydrogen blower in the respective hydrogen supply lines of the plurality of hydrogen supply systems are the same.

According to the fuel cell system of the present disclosure, in a fuel cell system in which a plurality of the fuel cell modules is provided, a plurality of the hydrogen supply systems (including the hydrogen supply lines and the hydrogen blowers) and a plurality of the circulation systems (including the reflux lines) are provided so as to correspond one-to-one to the fuel cell modules, lengths of the respective reflux lines of the plurality of circulation systems are the same, and lengths downstream of the hydrogen blower in the respective hydrogen supply lines of the plurality of hydrogen supply systems are the same. In this manner, the pressure and the flow rate of the gas flowing through the hydrogen supply line for each fuel cell module can be made the same. As a result, it is possible to suppress the variation in the power generation amount for each fuel cell module.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an external perspective view of a fuel cell system;
Fig. 2 is an internal perspective view of a fuel cell unit included in the fuel cell system;
Fig. 3 is an internal side view of the fuel cell unit;
Fig. 4 is an internal perspective view of the fuel cell unit excluding a frame;
Fig. 5 is an internal top view of the fuel cell unit excluding the frame;
Fig. 6 is an internal side view of the fuel cell unit excluding the frame; and
Fig. 7 is a schematic configuration view of the fuel cell system.

### DETAILED DESCRIPTION

Embodiments for carrying out the present disclosure will be described with reference to the drawings.

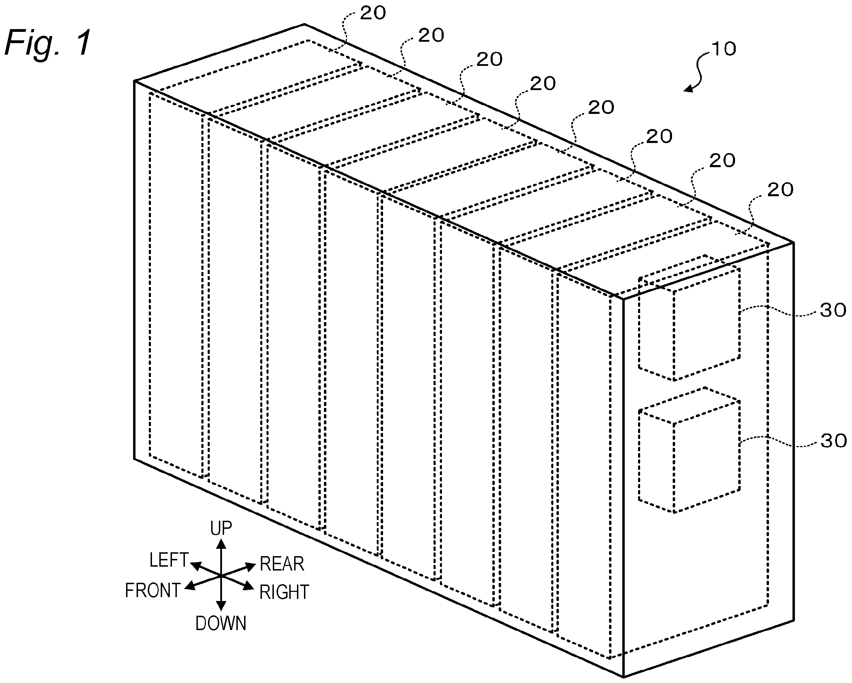

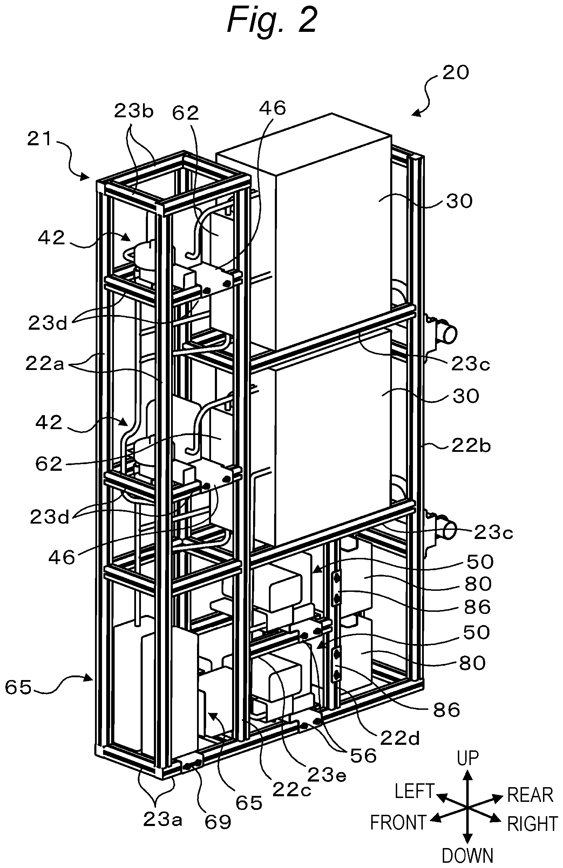

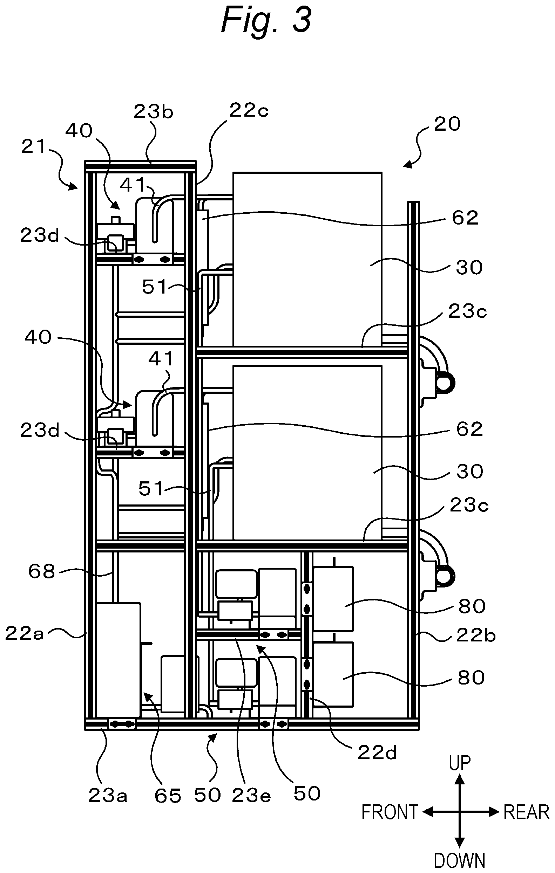

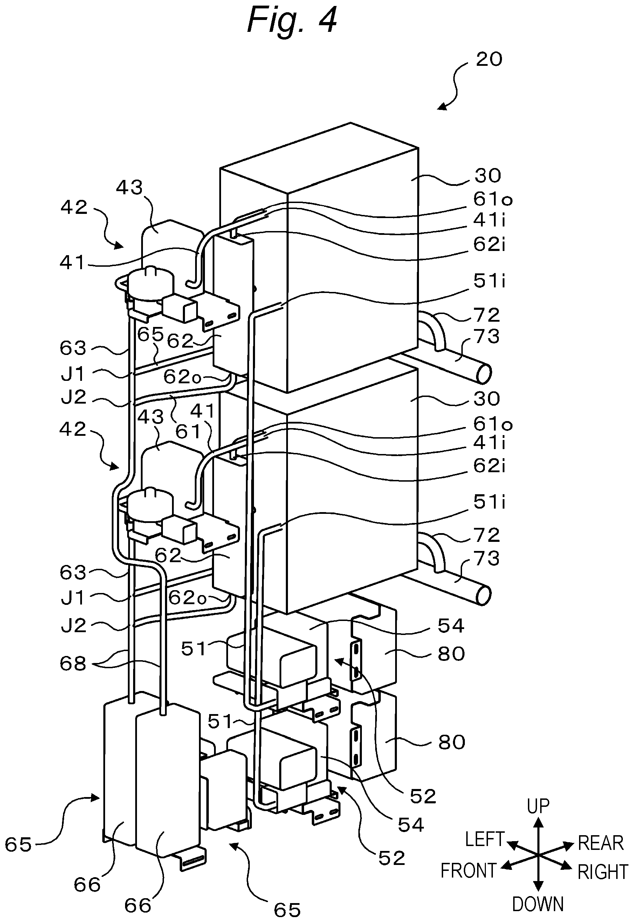

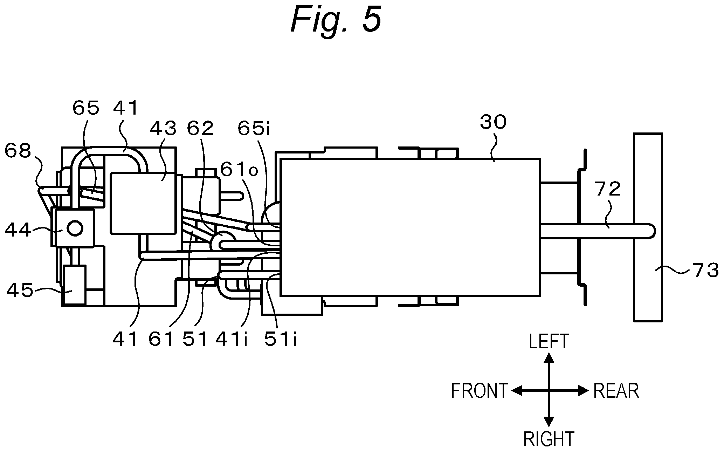

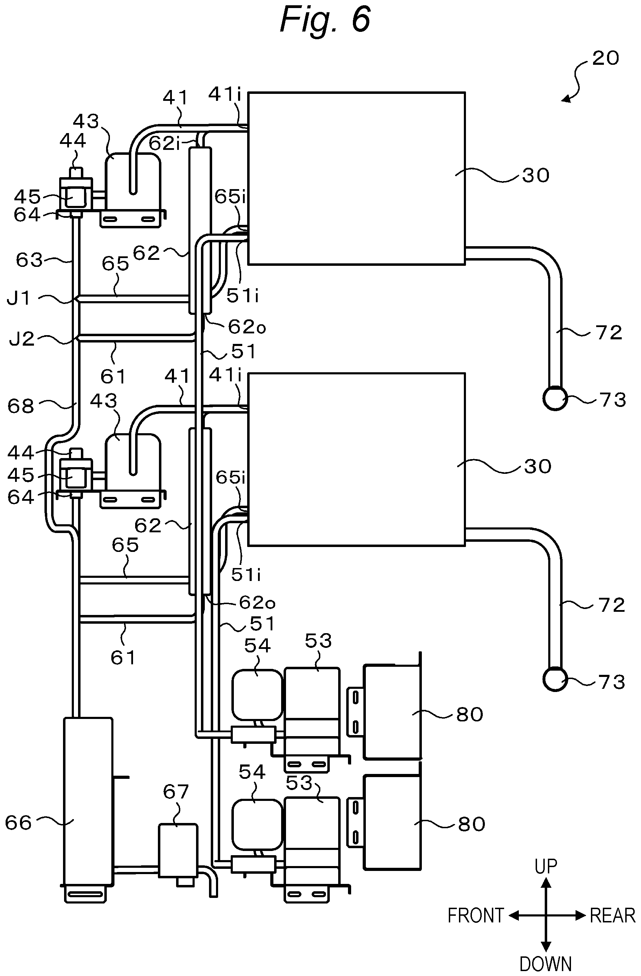

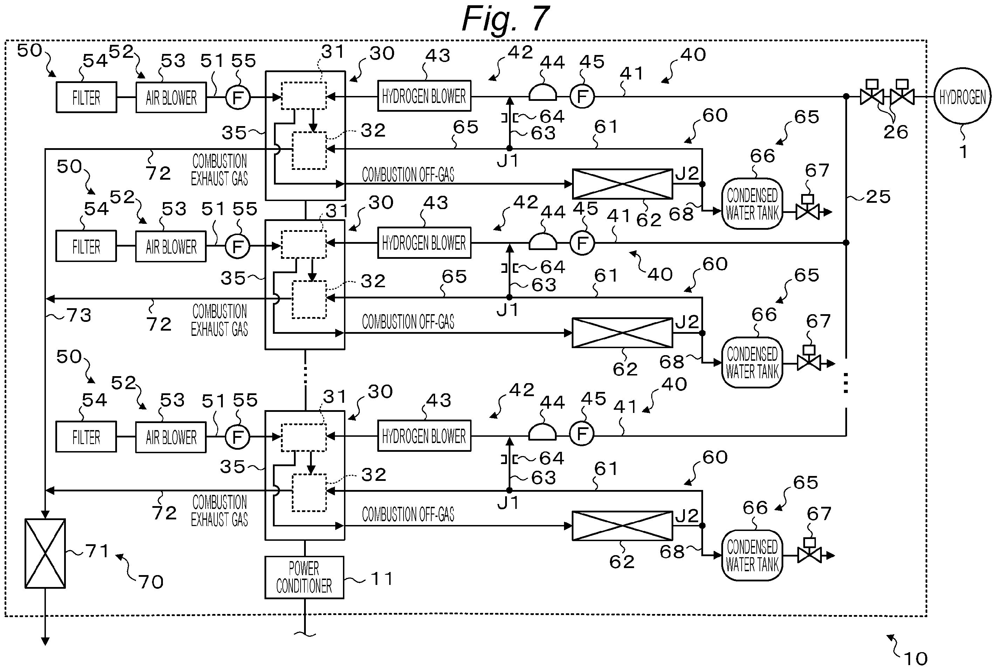

Fig. 1 is an external perspective view of a fuel cell system 10, Fig. 2 is an internal perspective view of a fuel cell unit 20 included in the fuel cell system 10, Fig. 3 is an internal side view of the fuel cell unit 20, Fig. 4 is an internal perspective view of the fuel cell unit 20 excluding a frame 21, Fig. 5 is an internal top view of the fuel cell unit 20 excluding the frame 21, Fig. 6 is an internal side view of the fuel cell unit 20 excluding the frame 21, and Fig. 7 is a schematic configuration view of the fuel cell system 10.

As shown in Fig. 1, the fuel cell system 10 of the present embodiment includes a plurality of (N) fuel cell units 20 each including a plurality of (M) fuel cell modules 30. The plurality of fuel cell units 20 is arranged side by side, and the fuel cell modules 30 are connected in series among the plurality of fuel cell units 20, thereby configuring the fuel cell system 10.

Each fuel cell unit 20 is a unit having a substantially rectangular parallelepiped appearance, and includes the frame 21 that supports and fixes various constituent members of the fuel cell units 20.

The frame 21 is configured by connecting a plurality of columns disposed on the outer periphery with beams. In the present embodiment, the columns of the frame 21 include two long front corner columns 22a and two long rear corner columns 22b disposed at the four corners, and two long side columns 22c respectively provided between one front corner column 22a and one rear corner column 22b and between the other front corner column 22a and the other rear corner column 22b. In addition, two short auxiliary columns 22d are provided between the two side columns 22c and the two rear corner columns 22b.

The beams of the frame 21 include bottom beams 23a that connect the front corner columns 22a, the rear corner columns 22b, and the side columns 22c at the bottom, and ceiling beams 23b that connect the front corner columns 22a and the side columns 22c at the ceiling. Further, the beams of the frame 21 include module fixing beams 23c provided at a plurality of upper and lower stages that connect the rear corner columns 22b and the side columns 22c above the bottom beams 23a, hydrogen blower sub-assembly fixing beams 23d provided at a plurality of upper and lower stages that connect the front corner columns 22a and the side columns 22c between the bottom beams 23a and the ceiling beams 23b, and air blower sub-assembly fixing beams 23e that connect the side columns 22c and the auxiliary columns 22d between the bottom beams 23a and the lower-stage module fixing beams 23c.

In addition, each fuel cell unit 20 includes a fuel cell module 30 including one fuel cell stack 31, a hydrogen supply system 40, an air supply system 50, a circulation system 60, an exhaust heat recovery system 70, and an electronic control unit (ECU) 80. In the present embodiment, each fuel cell unit 20 includes a plurality of (M) fuel cell modules 30 (fuel cell stacks 31) connected in series. In addition, one hydrogen supply system 40, one air supply system 50, one circulation system 60, and one electronic control unit 80 are provided for one fuel cell module 30.

The plurality of fuel cell modules 30 of the fuel cell unit 20 is fixed by bolts to the module fixing beams 23c provided at the plurality of upper and lower stages. As illustrated in Fig. 7, each fuel cell module 30 includes a combustor 32, a heat exchanger 71, and the like in addition to the fuel cell stack 31. These components are accommodated in a module case 35 having a heat-insulating property. The fuel cell stack 31 includes a plurality of solid oxide unit cells each including an electrolyte, an anode (fuel electrode) disposed on one surface side of the electrolyte, and a cathode (air electrode) disposed on the other surface side of the electrolyte. The fuel cell stack 31 generates electric power by an electrochemical reaction between hydrogen supplied from a hydrogen supply source 1 (for example, a hydrogen tank) and oxygen contained in air.

The plurality of hydrogen supply systems 40 of the fuel cell unit 20 are fixed to the frame 21 so as to face the corresponding fuel cell modules 30 in the front-rear direction, respectively. As shown in Figs. 2 to 7, each hydrogen supply system 40 includes an anode gas pipe 41 and a hydrogen blower 43 provided in the anode gas pipe 41, the anode gas pipe 41 branching off from one end of a common fuel pipe 25, the other end of which is connected to the hydrogen supply source 1, to be connected to a hydrogen inlet 41i of the fuel cell module 30, the hydrogen inlet 41i connecting with the anode inlet of the corresponding fuel cell stack 31. The fuel pipe 25 is provided with an on-off valve 26 (dual valve). When the hydrogen blower 43 is operated, hydrogen gas of the hydrogen supply source 1 is supplied from the fuel pipe 25 through the anode gas pipe 41 to the corresponding fuel cell module 30 (anode of the fuel cell stack 31). Since the hydrogen blower 43 is installed in each anode gas pipe 41 (branch pipe), the supply amount of hydrogen gas can be controlled for each fuel cell module 30 by individually controlling each hydrogen blower 43.

A governor 44 is provided upstream of the hydrogen blower 43 in the anode gas pipe 41, and a flow rate sensor 45 is provided upstream of the governor 44 in the anode gas pipe 41. The hydrogen blower 43, the governor 44, and the flow rate sensor 45 are formed into a sub-assembly as a hydrogen blower sub-assembly, and the hydrogen blower sub-assembly is fixed to the hydrogen blower sub-assembly fixing beam 23d via a bracket by bolts.

The plurality of air supply systems 50 of the fuel cell unit 20 is collectively disposed in an empty space (below the two fuel cell modules 30) at the bottom of the frame 21. As shown in Figs 2 to 7, each air supply system 50 includes a cathode gas pipe 51 having one end connected to an air inlet 51i of the fuel cell module 30 connecting with a cathode inlet of the fuel cell stack 31, an air blower 53 provided in the cathode gas pipe 51, and an air filter 54 provided at the other end of the cathode gas pipe 51. Air is sucked from the air filter 54 to the cathode gas pipe 51 by operating the air blower 53, and the sucked air is supplied through the cathode gas pipe 51 to the fuel cell module 30 (cathode of the fuel cell stack 31). Since the air blower 53 is installed in each cathode gas pipe 51, the supply amount of air can be controlled for each fuel cell module 30 by individually controlling each air blower 53.

A flow rate sensor 55 is provided downstream of the air blower 53 in the cathode gas pipe 51. The air blower 53, the air filter 54, and the flow rate sensor 55 are formed into a sub-assembly as an air blower sub-assembly, and the air blower sub-assembly is fixed to the bottom beam 23a or the air blower sub-assembly fixing beam 23e via a bracket by bolts.

As shown in Figs. 2 to 7, the plurality of circulation systems 60 of the fuel cell unit 20 includes an anode off-gas pipe 61 having one end connected to an anode off-gas outlet 61o of the fuel cell module 30 connecting with an anode outlet of the fuel cell stack 31, a condenser 62 provided in the anode off-gas pipe 61, and a combustion gas pipe 65 that branches off at a first branch point J1 downstream of the condenser 62 in the anode off-gas pipe 61 and is connected to a combustion gas inlet 65i of the fuel cell module 30 connecting with the combustor 32. The condenser 62 extends in the up-down direction and is disposed between the fuel cell module 30 and the hydrogen supply system 40 (hydrogen blower sub-assembly) facing each other.

The anode off-gas discharged from an anode outlet of the fuel cell stack 31 to the anode off-gas pipe 61 is supplied as combustion gas through combustion gas pipe 65 to the combustor 32 after water vapor contained in the anode off-gas is condensed by heat exchange with a heat exchange medium (cooling water) in the condenser 62. Then, the anode off-gas (combustion gas) is mixed with the cathode off-gas directly introduced from a cathode outlet of the fuel cell stack 31 and burned in the combustor 32. The heat recovered by the heat exchange with the heat exchange medium in the condenser 62 is supplied to a heat utilizing device installed in a factory or the like.

In addition, the plurality of circulation systems 60 of the fuel cell unit 20 includes a condensed water tank 66 disposed at the bottom of the frame 21 of the fuel cell unit 20, and a condensed water pipe 68 branched at a second branch point J2 downstream of the condenser 62 and upstream of first branch point J1 in the anode off-gas pipe 61 and connected to the condensed water tank 66. Condensed water generated by being condensed by the condenser 62 flows into the condensed water pipe 68 at the second branch point J2, flows through the condensed water pipe 68, and is stored in the condensed water tank 66. In the present embodiment, an anode off-gas inlet 62i through which the anode off-gas of the condenser 62 is introduced is located below the anode off-gas outlet 61o of the fuel cell module 30, the second branch point J2 is located below an anode off-gas outlet 62o through which the anode off-gas of the condenser 62 is led out, and the condensed water tank 66 is located below the second branch point J2. Then, the condensed water pipe 68 extends downward from the second branch point J2 and is connected to the condensed water tank 66. As a result, the condensed water generated by the condenser 62 can be discharged smoothly. A drain valve 67 is provided at the bottom of the condensed water tank 66, and the condensed water in the condensed water tank 66 is drained through the drain valve 67. The condensed water tank 66 and the drain valve 67 are formed into a sub-assembly as a condensed water tank sub-assembly, and the condensed water tank sub-assembly is fixed to the bottom beam 23a of the frame 21 via a bracket by bolts.

Further, the plurality of circulation systems 60 of the fuel cell unit 20 also includes a reflux gas pipe 63 that branches off at the first branch point J1, which is the other end of the anode off-gas pipe 61, and is connected between the hydrogen blower 43 and the governor 44 in the anode gas pipe 41 of the corresponding hydrogen supply system 40. The reflux gas pipe 63 is provided with an orifice 64 for regulating the flow rate of the anode off-gas (reflux gas) flowing through the reflux gas pipe 63. Since the anode off-gas pipe 61 branches off into the reflux gas pipe 63 and the combustion gas pipe 65 at the first branch point J1, it is possible to reflux the anode off-gas into the anode gas pipe 41 at a desired reflux rate as a reflux gas by setting the valve opening pressure of the governor 44 and the opening ratio of the orifice 64 in advance. In the present embodiment, the first branch point J1 is located above the second branch point J2, and the hydrogen supply system 40 (hydrogen blower sub-assembly) and the combustion gas inlet 65i of the fuel cell module 30 are located above the first branch point J1. Therefore, after the anode off-gas is separated into gas and liquid by the condenser 62, the liquid component (condensed water) is guided downward from the second branch point J2, while the gas component is guided upward from the first branch point J1 and supplied to the anode gas pipe 41 and the combustor 32. Thus, the anode off-gas can be more reliably separated into gas and liquid, and the partial pressure of water vapor in the pipe can be reduced. As a result, the anode off-gas can be smoothly refluxed to the anode gas pipe 41 as the reflux gas, and the anode off-gas can be smoothly supplied to the combustor 32 as the combustion gas, so that the efficiency of the fuel cell system 10 can be further improved.

As shown in Fig. 7, the exhaust heat recovery system 70 includes a plurality of combustion exhaust gas pipes 72 having one end connected to the combustor 32 of each fuel cell module 30, a collecting pipe 73 connected to the other ends of the plurality of combustion exhaust gas pipes 72, and a heat exchanger 71 provided in the collecting pipe 73. The combustion exhaust gas discharged from the combustor 32 of each fuel cell module 30 to the combustion exhaust gas pipe 72 collects in the collecting pipe 73, exchanges heat with the heat exchange medium in the heat exchanger 71, and is then discharged to the outside air. The heat recovered by the heat exchange with the heat exchange medium is supplied to a heat utilizing device installed in a factory or the like.

The plurality of electronic control units 80 of each fuel cell unit 20 controls the operation of the corresponding fuel cell module 30, and is provided for each fuel cell module 30. Each electronic control unit 80 is configured as a microprocessor centered on a CPU, and includes a ROM, a RAM, an input/output port, and the like in addition to the CPU. Detection signals from the flow rate sensor 45 of the corresponding hydrogen supply system 40, the flow rate sensor 55 of the corresponding air supply system 50, and the like are input to the electronic control unit 80 via the input port. On the other hand, the electronic control unit 80 outputs control signals to the hydrogen blower 43 of the corresponding hydrogen supply system 40, the air blower 53 of the corresponding air supply system 50, the drain valve 67 of the corresponding circulation system 60, and the like via the output port. As illustrated in Figs. 2 and 3, the plurality of electronic control units 80 is fixed to the auxiliary column 22d via a bracket by bolts.

In the present embodiment, the fuel cell unit 20 includes the plurality of (M) fuel cell stacks 31 connected in series, and the fuel cell system 10 includes the plurality of (N) fuel cell units 20 in which the fuel cell stacks 31 are connected in series among the plurality of fuel cell units 20. As a result, in the fuel cell system 10, N × M fuel cell stacks 31 are connected in series to provide a large power generation output. Therefore, in the fuel cell system 10, it is possible to respond to various power generation output requests only by changing the number of fuel cell units 20 to be coupled. In addition, the fuel cell unit 20 includes a plurality of sets of fuel cell module 30 (fuel cell stack 31), hydrogen supply system 40 (hydrogen blower sub-assembly), air supply system 50 (air blower sub-assembly), and circulation system 60 (condenser 62 and condensed water tank sub-assembly) each having the same configuration. As a result, the individual sizes of the constituent members (auxiliary machines) can be reduced, and these constituent members can be accommodated in a limited space of the fuel cell unit 20. As a result, the fuel cell system 10 can be further downsized while coping with a large power generation output. Further, the cost can be greatly reduced by the mass production effect.

As described above, the plurality of hydrogen supply systems 40 (hydrogen blower sub-assemblies 42) accommodated in one fuel cell unit 20 is disposed so as to face the corresponding fuel cell module 30 in the front-rear direction, so that the respective pipe lengths can be the same for the anode gas pipes 41, the anode off-gas pipes 61, or the reflux gas pipes 63. As a result, the pressure and the flow rate of the gas flowing through the fuel supply lines (the anode gas pipes 41, the anode off-gas pipes 61, and the reflux gas pipes 63) can be made the same. As a result, it is possible to suppress the variation in the power generation amount for each fuel cell module 30 and each fuel cell unit 20. In addition, the specifications of the respective constituent members of the hydrogen supply system 40 can be made the same, and the cost can be reduced. Further, in each electronic control unit 80, individual control logic and parameter adjustment in each fuel cell module 30 are unnecessary, and control is facilitated. Additionally, since the plurality of air supply systems 50 are collectively disposed in the empty space at the bottom of the frame 21, the dead space can be reduced to further downsize the fuel cell unit 20.

In addition, since hydrogen gas is used as fuel gas, a reformer for reforming (steam reforming) raw fuel gas (natural gas or LP gas) and supply of water (water vapor) are unnecessary for the fuel cell module 30. Therefore, there is no water vapor partial pressure in the anode gas pipe 41, and hydrogen gas can be supplied at a relatively low supply pressure. In the present embodiment, the anode off-gas from the anode outlet is passed through the condenser 62 outside the fuel cell module 30 to remove at least a part of the water vapor contained in the anode off-gas, and then the anode off-gas is refluxed to the hydrogen supply system 40 (anode gas pipe 41), so that the efficiency of the fuel cell stack 31 can be improved. In addition, since the remaining anode off-gas from which at least a part of the water vapor has been removed is supplied to the combustor 32, the flammability of the anode off-gas in the combustor 32 can be further improved.

In the embodiment described above, the orifice 64 is provided in the reflux gas pipe 63, but an electromagnetic valve may be provided.

In the embodiment described above, the first branch point J1 is located above the second branch point J2, but the first branch point J1 may be located at the same position as the second branch point J2. For example, the first branch point J1 and the second branch point J2 may be configured to branch off into three branches from the anode off-gas pipe 61.

In the embodiment described above, the plurality of fuel cell modules 30 included in the fuel cell unit 20 are disposed so as to be arranged in the up-down direction, but may be disposed so as to be arranged in the right-left direction.

In the embodiment described above, the plurality of hydrogen supply systems 40 included in the fuel cell unit 20 are disposed so as to face the corresponding fuel cell modules 30, respectively. However, the plurality of hydrogen supply systems 40 may be disposed at positions paired with the corresponding fuel cell modules 30, which may be a position, for example, above the fuel cell modules 30 or below the fuel cell modules 30. However, it is desirable that the plurality of hydrogen supply systems 40 is each disposed near the corresponding fuel cell module 30.

In the embodiment described above, the air supply system 50 (air blower sub-assembly) is disposed in an empty space at the bottom of the frame 21. However, the air supply system 50 may be disposed in any position as long as it is an empty space in the frame 21. For example, the air supply system 50 may be disposed opposite to the hydrogen supply system 40 so as to face the fuel cell module 30.

In the embodiment described above, the fuel cell system 10 is configured by connecting a plurality of fuel cell units 20 having the same configuration, but may be configured by the single fuel cell unit 20.

In the embodiment described above, the fuel cell system 10 includes the plurality of fuel cell units 20 such that the fuel cell stacks 31 are connected in series among the fuel cell units 20. However, the fuel cell system may be configured as a large-scale system in which a plurality of fuel cell systems 10 is further coupled. That is, the plurality of fuel cell systems 10 may be coupled such that the fuel cell stacks 31 connected in series among the fuel cell units 20 are further connected in series among the fuel cell systems 10. In such case, when the number of fuel cell stacks 31 included in one fuel cell unit 20 is M, the number of fuel cell units 20 included in one fuel cell system 10 is N, and the number of fuel cell systems 10 to be coupled is L, M × N × L fuel cell stacks 31 are connected in series, and it is possible to respond to a request for a larger power generation output. In addition, the plurality of fuel cell systems 10 included in the large-scale system may be connected in parallel. In such case, it is possible to perform repair or inspection for each fuel cell system 10 while operating the large-scale system.

Although the embodiments for carrying out the present disclosure have been described above with reference to the embodiments, the present disclosure is not limited to such embodiments at all, and can be carried out in various forms without departing from the gist of the present disclosure.

The present disclosure is applicable to a manufacturing industry and the like of a fuel cell system.

## Claims

1. A fuel cell system (10) comprising:
a fuel cell module (30) including a fuel cell stack (31) that generates power using fuel gas supplied to an anode and oxidant gas supplied to a cathode, a combustion unit (32) that burns combustible gas introduced from a combustion gas inlet (65i), and a heat-insulating module case (35) that accommodates the fuel cell stack (31) and the combustion unit (32);
a hydrogen supply system (40) including a hydrogen supply line connected to a hydrogen inlet (41i) of the fuel cell module (30) connecting with an inlet of the anode and a hydrogen supply source (1), and a hydrogen blower (43) provided in the hydrogen supply line; and
a circulation system (60) including a hydrogen off-gas line connected to a hydrogen off-gas outlet of the fuel cell module (30) connecting with an outlet of the anode, a heat exchanger (71) provided in the hydrogen off-gas line, a combustion gas line connected to the combustion gas inlet (65i) of the fuel cell module (30), and a reflux line connected to the hydrogen supply line, the circulation system (60) distributing hydrogen off-gas discharged from the outlet of the anode and having passed through the heat exchanger (71) to the combustion gas line and the reflux line, wherein
the hydrogen supply system (40) includes a governor (44) provided upstream of the hydrogen blower (43) in the hydrogen supply line,
the reflux line branches off from the hydrogen off-gas line and is connected between the hydrogen blower (43) and the governor (44) in the hydrogen supply line,
a plurality of the fuel cell modules (30) are provided,
a plurality of the hydrogen supply systems (40) and a plurality of the circulation systems (60) are provided so as to correspond one-to-one to the fuel cell modules (30),
lengths of the respective reflux lines of the plurality of circulation systems (60) are the same, and
lengths downstream of the hydrogen blower (43) in the respective hydrogen supply lines of the plurality of hydrogen supply systems (40) are the same.

2. The fuel cell system (10) according to Claim 1, wherein
the hydrogen off-gas line branches into the reflux line and the combustion gas line at a first branch point (J1) downstream of the heat exchanger (71),
the circulation system (60) includes an orifice (64) provided in the reflux line, and
the hydrogen off-gas that has passed through the heat exchanger (71) is distributed to the reflux line and the combustion gas line at a predetermined distribution rate by the orifice (64).

3. The fuel cell system (10) according to Claim 2, wherein the hydrogen blower (43), the orifice (64), and a combustion gas inlet (65i) of the fuel cell module (30) are located above the first branch point (J1).

4. The fuel cell system (10) according to Claim 2, further comprising
a condensed water line that branches off from the hydrogen off-gas line at a second branch point (J2) downstream of the heat exchanger (71) and through which condensed water obtained by condensation of the hydrogen off-gas in the heat exchanger (71) flows, wherein
the second branch point (J2) is located at the same position as the first branch point (J1) or below the first branch point (J1).

5. The fuel cell system (10) according to Claim 4, further comprising
a condensed water tank (66) that stores the condensed water, wherein
the second branch point (J2) is located below the hydrogen off-gas outlet of the heat exchanger (71),
the condensed water tank (66) is located below the second branch point (J2), and
the condensed water line extends downward from the second branch point (J2) and is connected to the condensed water tank (66).

6. The fuel cell system (10) according to Claim 4, wherein the second branch point (J2) is provided downstream of the heat exchanger (71) and upstream of the first branch point (J1) in the hydrogen off-gas line.

7. The fuel cell system (10) according to any one of Claims 1 to 6, wherein a hydrogen off-gas inlet of the heat exchanger (71) is located below the hydrogen off-gas outlet of the fuel cell module (30).
